(19) Europäisches Patentamt
European Patent Office
Office européen des brevets

(11) **EP 2 791 710 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(21) Anmeldenummer: **12784546.9**

(22) Anmeldetag: **30.10.2012**

(51) Int Cl.:
*G01V 3/12* (2006.01)   *G01V 3/15* (2006.01)

(86) Internationale Anmeldenummer:
**PCT/EP2012/071479**

(87) Internationale Veröffentlichungsnummer:
**WO 2013/087282 (20.06.2013 Gazette 2013/25)**

(54) **HANDWERKZEUGVORRICHTUNG MIT ZUMINDEST EINER ORTUNGSVORRICHTUNG**

HAND TOOL DEVICE HAVING AT LEAST ONE LOCATING DEVICE

DISPOSITIF OUTIL PORTATIF COMPORTANT AU MOINS UN DISPOSITIF DE LOCALISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2011 DE 102011088439**

(43) Veröffentlichungstag der Anmeldung:
**22.10.2014 Patentblatt 2014/43**

(73) Patentinhaber: **Robert Bosch GmbH**
**70442 Stuttgart (DE)**

(72) Erfinder:
• **SGARZ, Heiko**
**71229 Leonberg (DE)**
• **POHLMANN, Martin**
**70567 Stuttgart (DE)**
• **BROSI, Jan-Michael**
**70771 Leinfelden-Echterdingen (DE)**

(56) Entgegenhaltungen:
**US-A- 4 728 897      US-A- 5 854 603**
**US-A1- 2005 225 482   US-A1- 2010 207 803**
**US-A1- 2011 181 483   US-B1- 6 657 577**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Es ist bereits eine Handwerkzeugvorrichtung mit einer Recheneinheit und zumindest einer Ortungsvorrichtung, die dazu vorgesehen ist, ein Ortungssignal zumindest zu empfangen, vorgeschlagen worden. Insbesondere werden in US 2010/0207803 A1 und US 6.657.577 B1 Ortungsvorrichtungen beschrieben, die geeignet sind, eine Positionsinformation eines Ortungsobjekts zu ermitteln.

Offenbarung der Erfindung

Die Erfindung geht aus von einer Handwerkzeugvorrichtung mit einer Recheneinheit und zumindest einer Ortungsvorrichtung, die dazu vorgesehen ist, ein Ortungssignal zumindest zu empfangen.

Es wird vorgeschlagen, dass die Recheneinheit dazu vorgesehen ist, mittels einer Bestimmung eines zirkular polarisierten Anteils des Ortungssignals zumindest eine Positionsinformation eines Ortungsobjekts zu ermitteln. Unter einer "Recheneinheit" soll insbesondere eine Einheit mit einem Informationseingang, einer Informationsverarbeitung und einer Informationsausgabe verstanden werden. Vorzugsweise umfasst der Informationseingang zumindest einen Analog-Digital-Wandler, der bei einem Betrieb den Anteil des Ortungssignals digitalisiert. Vorteilhaft weist die Recheneinheit zumindest einen Prozessor, einen Speicher, Ein- und Ausgabemittel, weitere elektrische Bauteile, ein Betriebsprogramm und/oder zumindest eine Berechnungsroutine auf. Vorzugsweise sind die Bauteile der Recheneinheit auf einer gemeinsamen Platine angeordnet und/oder vorteilhaft in einem gemeinsamen Gehäuse angeordnet. Vorteilhaft bestimmt die Ortungsvorrichtung wenigstens, ob sich ein Ortungsobjekt in einem Ortungsbereich der Ortungsvorrichtung befindet. Besonders vorteilhaft bestimmt die Ortungsvorrichtung zumindest eine Entfernung zwischen der Ortungsvorrichtung und dem Ortungsobjekt. Insbesondere soll unter einer "Ortungsvorrichtung" eine Vorrichtung verstanden werden, die bei einem Betrieb ein Ortungssignal aussendet und einen von dem Ortungsobjekt reflektierten Anteil des Ortungssignals empfängt. Des Weiteren soll unter einem "Ortungssignal" Insbesondere ein Signal verstanden werden, das die Ortungsvorrichtung zur Ortung des Ortungsobjekts aussendet. Vorzugsweise weist das Ortungssignal eine Bandbreite von mehr als 500 MHz, vorteilhaft mehr als 1 GHz, besonders vorteilhaft mehr als 2 GHz auf. Alternativ könnte die Ortungsvorrichtung ein schmalbandiges Ortungssignal senden, wodurch eine konstruktiv besonders einfache Ausgestaltung möglich ist. Unter dem Begriff "empfangen" soll insbesondere verstanden werden, dass die Ortungsvorrichtung einen Teil einer Energie des von dem Ortungsobjekt reflektierten Ortungssignals von einer sich durch einen Isolator und/oder ein Vakuum ausbreitenden elektromagnetischen Welle in eine in einem elektrischen Leiter geführte Welle wandelt. Ferner soll unter "vorgesehen" insbesondere speziell programmiert, ausgelegt und/oder ausgestattet verstanden werden. Unter einem "zirkular polarisierten Anteil des Ortungssignals" soll insbesondere zumindest ein Teil einer Energie des Ortungssignals verstanden werden, dessen Betrag eines elektrischen Feldvektors zumindest bei einer Frequenz konstant ist. Vorzugsweise dreht sich der Feldvektor bei der Frequenz innerhalb einer Periode um 360 Grad. Besonders vorteilhaft ist ein zirkular polarisierter Anteil des Ortungssignals bei einem Aussenden um 3 dB größer als ein linear polarisierter Anteil des Ortungssignals. Insbesondere soll unter einer "Bestimmung eines zirkular polarisierten Anteils des Ortungssignals" jede von folgenden drei Bestimmungen sowie dem Fachmann als sinnvoll erscheinende Kombinationen der Bestimmungen verstanden werden. Erstens, die Recheneinheit quantisiert bei einem Betrieb einen zirkular polarisierten Anteil des Ortungssignals, das die Ortungsvorrichtung aus zwei linear polarisiert empfangenen, insbesondere zueinander orthogonalen, Anteilen des Ortungssignals kombiniert. Zweitens, die Recheneinheit quantisiert einen von einer Ortungsantenne der Ortungsvorrichtung direkt zirkular polarisiert empfangenen Anteil des Ortungssignals. Vorteilhaft drittens, die Recheneinheit quantisiert zwei linear polarisiert empfangene, insbesondere zueinander orthogonale, Anteile des Ortungssignals und berechnet daraus den zirkular polarisiert empfangenen Anteil des Ortungssignals. Insbesondere soll unter einer "Positionsinformation" eine Information verstanden werden, die zumindest eine Anordnung zumindest eines Teils des Ortungsobjekts relativ zu der Ortungsvorrichtung bei einem Ortungsvorgang beschreibt. Vorzugsweise beschreibt die Positionsinformation eine Entfernung des Ortungsobjekts, eine Ausrichtung des Ortungsobjekts, eine Form des Ortungsobjekts und/oder eine Richtung, in der das Ortungsobjekt relativ zu der Ortungsvorrichtung angeordnet ist. Unter einem "Ortungsobjekt" soll insbesondere ein in einem Werkstück, beispielsweise in einer Wand, verdeckt angeordnetes Bauteil verstanden werden, das sich in zumindest einer elektromagnetischen Eigenschaft von dem Werkstück unterscheidet, beispielsweise eine Stromleitung, eine Wasserleitung, ein Träger und/oder ein Armierungseisen. Insbesondere soll unter dem Begriff "ermitteln" verstanden werden, dass die Recheneinheit aus zumindest einer Kenngröße des zirkular polarisierten Anteils des Ortungssignals zumindest eine Positionsinformation des Ortungsobjekts berechnet. Durch die erfindungsgemäße Ausgestaltung der Handwerkzeugvorrichtung kann eine Reflexion des Ortungssignals an einer Oberfläche des Werkstücks und an anderen großflächigen Schichten des Werkstücks vorteilhaft unterdrückt werden. Dadurch ist eine besonders zuverlässige und genaue Ortung des Ortungsobjekts möglich.

In einer weiteren Ausgestaltung wird vorgeschlagen, dass die Ortungsvorrichtung eine Ortungsantenne aufweist, die dazu vorgesehen ist, zumindest zwei orthogonale Polarisationsrichtungen des Ortungssignals zu empfangen, wodurch mit einer vorteilhaft ausgestalteten Ortungsantenne der zirkular polarisierte Anteil des Ortungssignals und weitere Informationen des Ortungsobjekts bestimmt werden können. Unter einer "Ortungsantenne" soll insbesondere eine Antenne verstanden werden, die in zumindest einem Betriebszustand ein Signal zur Ortung des Ortungsobjekts aussendet und insbesondere empfängt. Insbesondere weist die Ortungsantenne einen 3-dB-Öffnungswinkel kleiner als 60 Grad, vorteilhaft kleiner als 45 Grad, besonders vorteilhaft kleiner als 30 Grad, auf. Vorteilhaft weist die Ortungsantenne in zumindest einem Teil eines Frequenzbereichs des Ortungssignals eine Verstärkung größer als 3 dBi, besonders vorteilhaft größer als 6 dBi, auf. Bevorzugt ist die Ortungsantenne dazu vorgesehen, ein breitbandiges Ortungssignal auszusenden. Insbesondere soll unter "breitbandig" verstanden werden, dass eine Amplitude eines ausgesendeten, reflektierten und empfangenen Ortungssignals in einem Frequenzbereich, der wenigstens 25 %, vorteilhaft wenigstens 50 %, einer Mittenfrequenz des Frequenzbereichs umfasst, eine Abweichung von einer maximalen Amplitude des Ortungssignals kleiner als -10 dB aufweist. Bevorzugt liegt die Mittenfrequenz zwischen 500 MHz und 12 GHz, besonders bevorzugt zwischen 1 und 6 GHz. Unter "orthogonalen Polarisationsrichtungen" sollen insbesondere voneinander unabhängige Polarisationsrichtungen verstanden werden, und zwar insbesondere eine linksdrehende und eine rechtsdrehende zirkulare Polarisationsrichtung bzw. zwei lineare Polarisationsrichtungen mit senkrecht zueinander ausgerichteten elektrischen Vektoren. Unter der Wendung "zwei orthogonale Polarisationsrichtungen empfangen" soll insbesondere verstanden werden, dass die Ortungsantenne dazu vorgesehen ist, zwei orthogonal polarisierte Teile des Ortungssignals zu empfangen und an getrennten Speisepunkten auszugeben. Vorzugsweise weist die Ortungsantenne in den zumindest zwei Polarisationsrichtungen einen Antennengewinn mit weniger mit weniger als 10 dB, vorteilhaft weniger als 6 dB, besonders vorteilhaft weniger als 3 dB Unterschied auf. Vorzugsweise weist die Ortungsantenne in den zwei orthogonalen Polarisationsrichtungen jeweils ein Maximum der Empfindlichkeit auf. Unter einem "Speisepunkt" soll insbesondere ein Punkt der Ortungsantenne verstanden werden, an dem das Ortungssignal zur Aussendung in die Ortungsantenne eingespeist und nach einem Empfang von der Ortungsantenne abgegeben wird.

Des Weiteren wird vorgeschlagen, dass die Recheneinheit dazu vorgesehen ist, aus den zumindest zwei empfangenen linearen Polarisationsrichtungen des Ortungssignals den zirkular polarisierten Anteil des Ortungssignals zu bestimmen, wodurch konstruktiv einfach ein zirkular polarisierter Anteil eines breitbandigen Ortungssignals bestimmt werden kann. Insbesondere soll unter der Wendung "den zirkular polarisierten Anteil des Ortungssignals bestimmen" verstanden werden, dass die Recheneinheit die zwei empfangenen linearen Polarisationsrichtungen des Ortungssignals voneinander getrennt quantisiert und aus den quantisierten Polarisationsrichtungen des Ortungssignals den zirkular polarisierten Anteil des Ortungssignals berechnet.

Ferner wird vorgeschlagen, dass die Recheneinheit dazu vorgesehen ist, den zirkular polarisierten Anteil des Ortungssignals aus zumindest einem Copolarisationsparameter und zumindest einem Kreuzpolarisationsparameter des reflektierten Ortungssignals zu bestimmen, wodurch eine Bestimmung des zirkular polarisierten Anteils mit vorteilhaft geringer Rechenleistung möglich ist. Insbesondere soll unter einem "Copolarisationsparameter" ein Streuparameter verstanden werden, der zumindest eine Reflexion an dem Ortungsobjekt ohne eine Änderung der Polarisationsrichtung beschreibt. Bevorzugt bestimmt die Recheneinheit den Copolarisationsparameter, indem sie das mit einer Polarisationsrichtung gesendete Ortungssignal und eine mit einer gleichen Polarisationsrichtung empfangene Reflexion des Ortungssignals vergleicht. Unter einem "Kreuzpolarisationsparameter" soll insbesondere ein Streuparameter verstanden werden, der zumindest eine von dem Ortungsobjekt verursachte Änderung der Polarisationsrichtung des Ortungssignals beschreibt. Bevorzugt bestimmt die Recheneinheit den Kreuzpolarisationsparameter durch einen Vergleich des mit einer ersten Polarisationsrichtung gesendeten Ortungssignals und einer empfangenen Reflexion des Ortungssignals, die eine zu der ersten Polarisationsrichtung orthogonale zweite Polarisationsrichtung aufweist. Unter einem "Streuparameter" soll insbesondere eine Beschreibung einer Reflexion des Ortungssignals an dem Ortungsobjekt verstanden werden, die zumindest Informationen über eine Amplitude und einen Phasenwinkel des reflektierten Anteils des Ortungssignals umfasst. Vorzugsweise beschreibt der Streuparameter einen Unterschied zwischen dem gesendeten Ortungssignal und dem reflektierten Anteil des Ortungssignals, und zwar insbesondere als komplexen Wert. Insbesondere bestimmt die Recheneinheit einen Streuparameter, indem sie ein gesendetes Ortungssignal und empfangene Anteile des Ortungssignals komplex vergleicht.

Zudem wird vorgeschlagen, dass die Ortungsvorrichtung zum Empfang jeder insbesondere linearen Polarisationsrichtung zumindest einen Speisepunkt aufweist, wodurch eine konstruktiv einfache Signalführung erreicht werden kann. Vorzugsweise ist die Ortungsantenne dazu vorgesehen, zwei orthogonale Polarisationsrichtungen von der jeweils anderen Polarisationsrichtung im Wesentlichen unbeeinflusst zu empfangen. Insbesondere soll unter "im Wesentlichen unbeeinflusst" verstanden werden, dass ein Überkoppeln von der einen Polarisationsrichtung in die andere Polarisationsrichtung weniger als -10 dB, vorteilhaft weniger als -20 dB, besonders weniger als -30 dB beträgt. Vorzugsweise weist die Ortungsvorrichtung vier Speisepunkte auf, wobei bevorzugt die Ortungsantenne bei einer Speisung von zwei insbesondere gegenüberliegend angeordneten Speisepunkten ein Ortungssignal mit gleicher Polarisationsrichtung abstrahlt.

Weiterhin wird vorgeschlagen, dass die Ortungsvorrichtung dazu vorgesehen ist, einen einzelnen Speisepunkt anzuregen, wodurch eine besonders genaue Ortung möglich ist. Insbesondere kann das Ortungssignal mit unterschiedlichen Abstrahlrichtungen gesendet werden. Unter der Wendung "einen einzelnen Speisepunkt anzuregen" soll insbesondere verstanden werden, dass ein Signalgenerator der Ortungsvorrichtung in einem Betriebszustand das Ortungssignal über einen der Speisepunkte an die Ortungsantenne der Ortungsvorrichtung abgibt. Alternativ oder zusätzlich könnte der Signalgenerator die Ortungsantenne über zwei Speisepunkte symmetrisch oder asymmetrisch anregen.

In einer vorteilhaften Ausbildung der Erfindung wird vorgeschlagen, dass die Ortungsantenne als eine LCR-Antenne ausgebildet ist, wodurch eine besonders geringe Baugröße und eine über eine große Bandbreite vorteilhafte Abstrahlcharakteristik möglich sind. Des Weiteren soll unter einer "LCR-Antenne (Large-Current-Radiator-Antenne)" insbesondere eine Antenne verstanden werden, die ein Abstrahlelement aufweist, durch welches im Betrieb ein großer Strom fließt. Vorzugsweise weist eine Strahlerfläche der LCR-Antenne einen Wellenwiderstand kleiner als 20 Ohm, vorteilhaft kleiner als 10 Ohm, besonders vorteilhaft kleiner als 5 Ohm, auf. Bevorzugt ist ein magnetischer Anteil des Ortungssignals im Nahfeld der Ortungsantenne wenigstens doppelt so groß wie ein elektrischer Anteil des Ortungssignals. Vorzugsweise ist die Ortungsantenne symmetrisch bezüglich einer Symmetrieebene ausgerichtet, wobei die Symmetrieebene senkrecht zu dem Abstrahlelement ausgerichtet ist. Die Ortungsantenne ist vorteilhaft zumindest teilweise von einem insbesondere korrosionsbeständigen Metallblech, insbesondere von einem gebogenen Metallblech, gebildet, wie beispielsweise einem Metallblech aus einem Edelstahl und/oder einem verzinkten und/oder einem vergoldeten Blech usw. Alternativ ist eine Ausbildung der Ortungsantenne als Kunststoffkörper denkbar, wobei Flächen und/oder Teilbereiche, insbesondere zur Leitung von Signalen, zumindest teilweise metallisiert sind, wobei eine spezifische Dielektrizitätskonstante des Kunststoffkörpers bei einer Konstruktion und/oder Berechnung der Ortungsantenne zu berücksichtigen ist. Alternativ könnte die Ortungsantenne als eine Patchantenne und/oder als eine dipolähnliche Antenne ausgebildet sein.

In einer weiteren Ausgestaltung wird vorgeschlagen, dass die Ortungsvorrichtung dazu vorgesehen ist, einen zirkular polarisierten Anteil des Ortungssignals auszugeben, wodurch eine einfache Quantisierung des Ortungssignals möglich ist. Vorteilhaft weist die Ortungsvorrichtung eine Hochfrequenzschaltung auf, die aus zwei linear polarisierten Anteilen des Ortungssignals einen zirkular polarisierten Anteil des Ortungssignals bestimmt. Vorzugsweise quantisiert die Recheneinheit den von der Ortungsvorrichtung bestimmten zirkular polarisierten Anteil des Ortungssignals.

Des Weiteren wird vorgeschlagen, dass die Ortungsvorrichtung eine Ortungsantenne aufweist, die dazu vorgesehen ist, den zirkular polarisierten Anteils des Ortungssignals direkt zu empfangen, wodurch eine konstruktiv besonders einfache Hochfrequenzelektronik verwendet werden kann. Vorzugsweise weist die Ortungsantenne bei einem Empfang eines zirkular polarisierten Signals eine höchste Empfindlichkeit auf, beispielsweise eine Helixantenne, eine Spiralantenne und/oder eine andere, dem Fachmann als sinnvoll erscheinende zirkulare Antenne.

Weiterhin geht die Erfindung aus von einem Handortungsgerät mit einer erfindungsgemäßen Handwerkzeugvorrichtung. Unter einem "Handortungsgerät" soll insbesondere ein Gerät verstanden werden, das dazu vorgesehen ist, von einem Bediener mit der Hand an einem Werkstück entlanggeführt, in dem Werkstück verdeckt angeordnete Bauelemente, beispielsweise Stromleitungen, Wasserrohre und/oder Holzbalken, zu erkennen und vorteilhaft eine Position, insbesondere eine Entfernung von dem Gerät, zu ermitteln. Vorzugsweise weist das Handortungsgerät ein Gerätegehäuse auf, das zur Führung von einem Bediener greifbar ausgebildet ist.

Ferner geht die Erfindung aus von einem Handwerkzeug mit einer erfindungsgemäßen Handwerkzeugvorrichtung, wodurch besonders einfach vor einem Arbeitsvorgang ein Werkstück auf Ortungsobjekte überprüft werden kann. Insbesondere soll unter einem "Handwerkzeug" ein, dem Fachmann als sinnvoll erscheinendes Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Gartengerät und/oder ein Multifunktionswerkzeug, verstanden werden. Vorzugsweise weist das Handwerkzeug ein Gerätegehäuse auf, das zur Führung von einem Bediener greifbar ausgebildet ist.

Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1    ein Werkstück und ein Handortungsgerät mit einer erfindungsgemäßen Handwerkzeugvorrichtung in einer perspektivischen Darstellung,

Fig. 2    eine Ortungsvorrichtung und eine Recheneinheit der Handwerkzeugvorrichtung aus Figur 1 in einer schematischen Darstellung,

Fig. 3    eine Ortungsantenne der Ortungsvorrichtung aus Figur 2 in einer perspektivischen Darstellung und

Fig. 4 ein alternatives Ausführungsbeispiel der Handwerkzeugvorrichtung aus Figur 1 in einer schematischen Darstellung.

Beschreibung der Ausführungsbeispiele

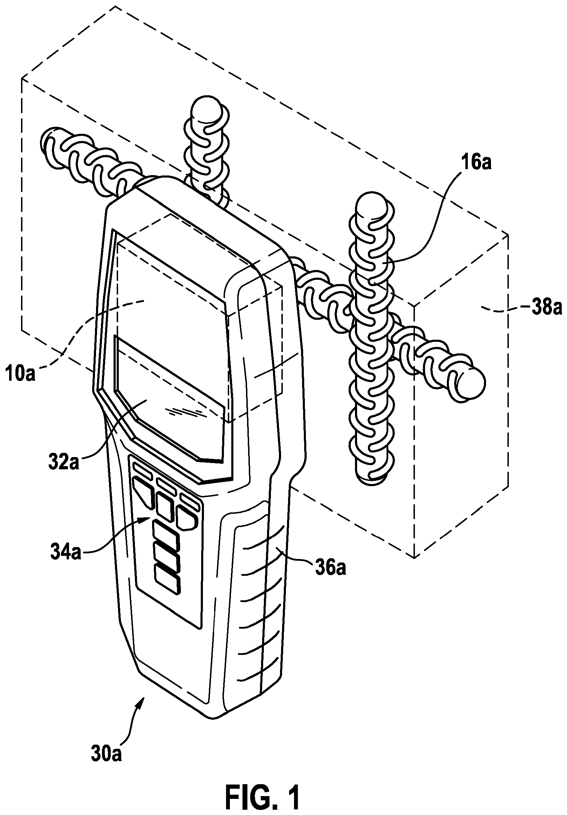

Figur 1 zeigt ein Handortungsgerät 30a mit einer Handwerkzeugvorrichtung 10a, einer Anzeigeeinheit 32a, einer Eingabeeinheit 34a und einem Gerätegehäuse 36a. Der Bediener führt das Handortungsgerät 30a bei einem Betrieb an dem Gerätegehäuse 36a über ein Werkstück 38a. Die Handwerkzeugvorrichtung 10a sendet dabei ein Ortungssignal durch eine der Anzeigeeinheit 32a abgewandte Seite des Gerätegehäuses 36a in das Werkstück 38a. Das Werkstück 38a ist hier als Teil einer Wand ausgebildet. Bei einem Ortungsvorgang reflektiert ein in dem Werkstück 38a verdeckt angeordnetes Ortungsobjekt 16a, hier ein Armierungseisen, einen Teil des Ortungssignals. Die Handwerkzeugvorrichtung 10a empfängt einen Teil des Ortungssignals und bestimmt daraus zumindest eine Information über das Ortungsobjekt 16a. In diesem Ausführungsbeispiel bestimmt die Handwerkzeugvorrichtung 10a, ob das Ortungsobjekt 16a in einer Hauptabstrahlrichtung 40a vor der Ortungsantenne 20a angeordnet ist und eine Tiefe, in der das Ortungsobjekt 16a angeordnet ist.

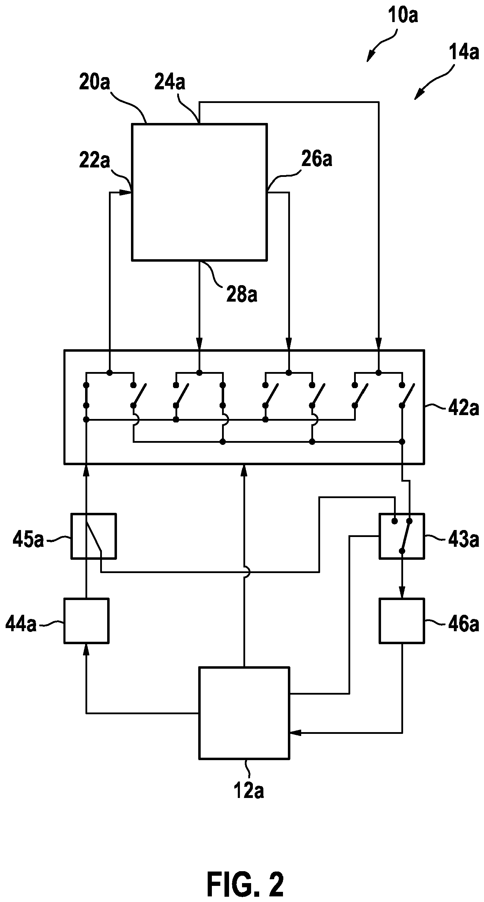

Die in Figur 2 näher dargestellte Handwerkzeugvorrichtung 10a umfasst eine Recheneinheit 12a und eine Ortungsvorrichtung 14a. Die Ortungsvorrichtung 14a weist eine Ortungsantenne 20a, einen ersten Antennenumschalter 42a, einen zweiten Antennenumschalter 42a, einen Signalgenerator 44a, eine Antennenweiche 45a und einen Analog-Digital-Wandler 46a auf. Der Signalgenerator 44a erzeugt das Ortungssignal. Das Ortungssignal weist eine Bandbreite von 8 GHz und eine Mittenfrequenz von 5 GHz auf. Die Recheneinheit 12a steuert die Erzeugung des Ortungssignals. Alternativ oder zusätzlich könnte ein Signalgenerator ein Ortungssignal insbesondere über einen Antennenumschalter an eine Recheneinheit übertragen, die das ungesendete Ortungssignal quantisiert. Die Ortungsantenne 20a weist vier Speisepunkte 22a, 24a, 26a, 28a auf. Die Antennenweiche 45a ist zwischen dem Signalgenerator 44a und einem der Antennenumschalter 42a angeordnet. Sie ist als ein Richtkoppler ausgebildet. Sie leitet ein von dem Signalgenerator 44a kommendes Ortungssignal an den Antennenumschalter 42a weiter. Des Weiteren leitet sie einen von dem Antennenumschalter 42a kommenden rücklaufenden Anteil des Ortungssignals in Richtung des Analog-DigitalWandlers 46a weiter. Der Antennenumschalter 42a leitet das Ortungssignal zu einem einzelnen Speisepunkt 22a, 24a, 26a, 28a der Ortungsantenne 20a weiter. Die Recheneinheit 12a steuert die Antennenumschalter 42a, 43a. Somit ist die Ortungsvorrichtung 14a dazu vorgesehen, einen einzelnen der Speisepunkte 22a, 24a, 26a, 28a anzuregen. Der Antennenumschalter 42a leitet das Ortungssignal nacheinander zu allen Speisepunkten 22a, 24a, 26a, 28a. Dargestellt ist, dass der Antennenumschalter 42a das Ortungssignal zu einem ersten der Speisepunkte 22a weiterleitet. Nicht näher dargestellt sind Filter, Verstärker, Mischer und Modulatoren der Ortungsvorrichtung 14. Alternativ könnte eine Ortungsvorrichtung zwei Empfänger, insbesondere mit zwei Analog-Digital-Wandlern, aufweisen. Dabei könnte ein Empfänger ein zu einem gespeisten Speisepunkt reflektiertes Ortungssignal empfangen und ein Empfänger ein zu einem ungespeisten Speisepunkt reflektiertes Ortungssignal empfangen. Dadurch kann auf den zweiten Antennenumschalter 43 verzichtet werden.

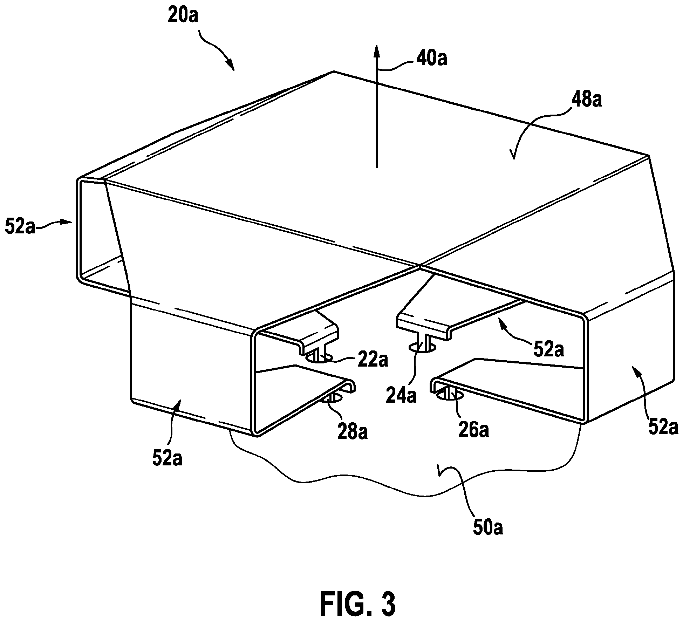

Figur 3 zeigt die Ortungsantenne 20a der Handwerkzeugvorrichtung 10a. Die Ortungsantenne 20a ist als eine LCR-Antenne ausgebildet. Die Ortungsantenne 20a umfasst vier Speisepunkte 22a, 24a, 26a, 28a, eine Strahlerfläche 48a, eine Massefläche 50a und vier Anpassmittel 52a. Die Ortungsantenne 20a sendet und empfängt bei einem Betrieb zwei orthogonale Polarisationsrichtungen des Ortungssignals voneinander getrennt. Dazu werden die vier Speisepunkte 22a, 24a, 26a, 28a der Ortungsantenne 20a einzeln angeregt und ein empfangender Teil des Ortungssignals von der Ortungsantenne 20a an den vier Speisepunkten 22a, 24a, 26a, 28a ausgegeben. Die Massefläche 50a reflektiert einen von der Strahlerfläche 48a in ihre Richtung gesendeten Anteil des Ortungssignals in Richtung der Hauptabstrahlrichtung 40a.

Die Strahlerfläche 48a sendet und empfängt bei einem Betrieb das Ortungssignal in der Hauptabstrahlrichtung 40a. Sie ist quadratisch geformt. Die Speisepunkte 22a, 24a, 26a, 28a regen über die Anpassmittel 52a die Strahlerfläche 48a zur Aussendung des Ortungssignals an. Dabei transformieren die Anpassmittel 52a einen Wellenwiderstand der Speisepunkte 22a, 24a, 26a, 28a, hier 50 Ohm, zu einem Wellenwiderstand der Strahlerfläche 48a, der hier kleiner als 10 Ohm ist. Die Anpassmittel 52a verlaufen trapezförmig von den Speisepunkten 22a, 24a, 26a, 28a zu der Strahlerfläche 48a. Die Strahlerfläche 48a und die Anpassmittel 52a werden von einer einstückig ausgebildeten leitenden Fläche gebildet.

Dabei verjüngen sich die Anpassmittel 52a von der Strahlerfläche 48a in Richtung der Speisepunkte 22a, 24a, 26a, 28a. Die Speisepunkte 22a, 24a, 26a, 28a sind auf einer von der Massefläche 50a aufgespannten Ebene angeordnet. Die Massefläche 50a erstreckt sich bei den Speisepunkten 22a, 24a, 26a, 28a parallel zu der Strahlerfläche 48a. Eine weitere Ausgestaltung der Ortungsantenne 20a kann der Druckschrift DE 10 2008 041 651 A1 entnommen werden.

Die Ortungsantenne 20a empfängt einen Teil des von dem Ortungsobjekt 16a reflektierten Ortungssignals und zwar beide orthogonale lineare Polarisationsrichtungen voneinander getrennt. Die Speisepunkte 22a, 24a, 26a, 28a leiten den empfangenen Teil des Ortungssignals an den Antennenumschalter 42a weiter. Zwei der Speisepunkte 22a, 24a leiten einen mit einer ersten linearen Polarisationsrichtung empfangenen Teil des Ortungssignals weiter. Zwei der Speisepunkte 26a, 28a leiten einen mit einer zweiten linearen Polarisationsrichtung empfangenen Teil des Ortungssignals weiter, die zu der ersten Polarisationsrichtung orthogonal ist. In diesem Ausführungsbeispiel ist die erste Polarisationsrichtung vertikal ausgerichtet und die zweite Polarisationsrichtung ist horizontal ausgerichtet. Der Antennenumschalter 42a leitet jeweils den von einem der ungespeisten Speisepunkte 24a, 26a, 28a abgegebenen Teil des Ortungssignals an den Analog-Digital-Wandler 46a weiter. Dargestellt ist, dass der Antennenumschalter 42a den Teil des Ortungssignals von einem zweiten der Speisepunkte 24a an den Analog-Digital-Wandler 46a weiterleitet. Der Analog-Digital-Wandler 46a quantisiert die von den drei Speisepunkten 24a, 26a, 28a kommenden Teile des Ortungssignals nacheinander.

Die Recheneinheit 12a weist eine Ortungsroutine auf, die bei einer Ortung Positionsinformationen des Ortungsobjekts 16a ermittelt. Die Ortungsroutine bestimmt einen zirkular polarisierten Anteil des Ortungssignals aus den zwei quantisierten Teilen des Ortungssignals. Dazu bestimmt die Recheneinheit 12a zwei komplexe Copolarisationsparameter $s_{vv}$, $s_{hh}$, und zwei komplexe Kreuzpolarisationsparameter $s_{hv}$, $s_{vh}$ der Reflexion. Ein erster der Copolarisationsparameter $s_{vv}$ beschreibt, welcher Anteil des mit der ersten Polarisationsrichtung gesendeten Ortungssignals mit der ersten Polarisationsrichtung reflektiert wird. Ein zweiter der Copolarisationsparameter $s_{hh}$ beschreibt, welcher Anteil des mit der zweiten Polarisationsrichtung gesendeten Ortungssignals mit der zweiten Polarisationsrichtung reflektiert wird. Ein erster der Kreuzpolarisationsparameter $s_{hv}$ beschreibt, welcher Anteil des mit der zweiten Polarisationsrichtung gesendeten Ortungssignals mit der ersten Polarisationsrichtung reflektiert wird. Ein zweiter der Kreuzpolarisationsparameter $s_{vh}$ beschreibt, welcher Anteil des mit der ersten Polarisationsrichtung gesendeten Ortungssignals mit der zweiten Polarisationsrichtung reflektiert wird. Die Streuparameter $s_{vv}$, $s_{hh}$, $s_{hv}$, $s_{vh}$ umfassen jeweils Informationen über eine Amplitude und einen Phasenwinkel der reflektierten Anteile des Ortungssignals bei verschiedenen Frequenzen. Zur Bestimmung der Copolarisationsparameter $s_{vv}$, $s_{hh}$, und der Kreuzpolarisationsparameter $s_{hv}$, $s_{vh}$ des Ortungsobjekts 16a werden von dem quantisierten Teil des Ortungssignals in der Recheneinheit 12a gespeicherte Streuparameter der Ortungsantenne 20a, insbesondere ein Übersprechen, abgezogen. Vorzugsweise beschreiben die Copolarisationsparameter $s_{vv}$, $s_{hh}$, und die Kreuzpolarisationsparameter $s_{hv}$, $s_{vh}$ einen Unterschied zwischen dem gesendeten Ortungssignals und dem reflektierten Anteil des Ortungssignals

Die Ortungsroutine bestimmt den zirkular polarisierten Anteil des Ortungssignals $s_{circ}$ nach der Formel:

$$s_{circ} = (s_{vv} - s_{hh}) + j\,(s_{hv} - s_{vh})$$

Somit ist die Recheneinheit 12a dazu vorgesehen, den zirkular polarisierten Anteil des Ortungssignals aus Copolarisationsparameter und Kreuzpolarisationsparameter des Ortungssignals zu bestimmen. Eine Signallaufzeit von der Ortungsantenne 20a bis zum Ortungsobjekt 16a und zurück zu der Ortungsantenne 20a führt im Frequenzbereich zu einer zu der Frequenz des Ortungssignals proportionalen Phasenverschiebung. Die Recheneinheit 12 bestimmt aus dem zirkular polarisierten Anteil des Ortungssignals $s_{circ}$ die Phasenverschiebung bei verschiedenen Frequenzen und berechnet aus der Phasenverschiebung den Abstand zwischen dem Ortungsobjekt 16a und der Ortungsantenne 20a.

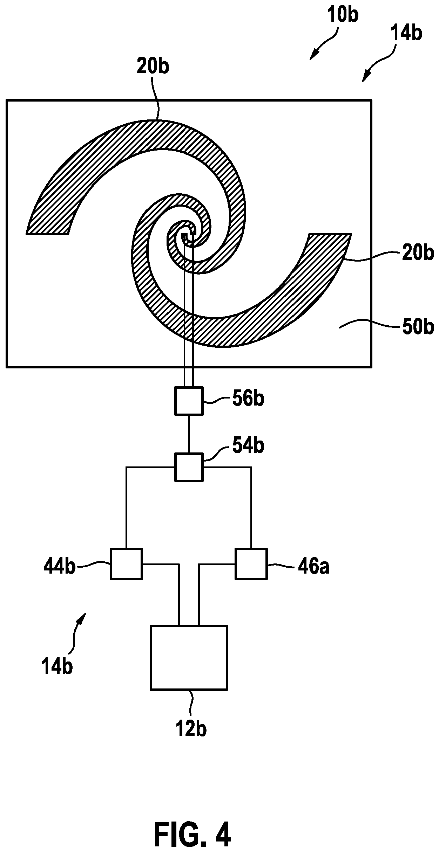

In der Figur 4 ist ein weiteres Ausführungsbeispiel der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung des anderen Ausführungsbeispiels der Figur 1 verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figur 4 ist der Buchstabe a durch den Buchstaben b ersetzt.

Die Figur 2 zeigt eine Handwerkzeugvorrichtung 10b mit einer Recheneinheit 12b und einer Ortungsvorrichtung 14b. Die Ortungsvorrichtung 14b sendet und empfängt bei einem Betrieb ein zirkular polarisiertes Ortungssignal. Die Recheneinheit 12b ermittelt mittels einer Bestimmung des zirkular polarisierten Anteils des Ortungssignals Positionsinformationen eines Ortungsobjekts. Die Recheneinheit 12b bestimmt einen komplexen Wert eines von dem Ortungsobjekt reflektierten Anteils des Ortungssignals und daraus einen Abstand zwischen dem Ortungsobjekt und der Ortungsantenne 20b.

Die Ortungsvorrichtung 14b weist eine Ortungsantenne 20b, einen Signalgenerator 44b, einen Analog-Digital-Wandler 46b, eine Massefläche 50b und eine Antennenweiche 54b auf. Die Ortungsantenne 20b ist als eine Spiralantenne ausgebildet. Die Ortungsantenne 20b sendet und empfängt bei einem Betrieb den zirkular polarisierten Anteil des Ortungssignals direkt. Dabei leitet die Antennenweiche 54b das Ortungssignal von dem Signalgenerator 44b zu der Ortungsantenne 20b und von der Ortungsantenne 20b zu dem Analog-Digital-Wandler 46b. Der Analog-Digital-Wandler 46b quantisiert den reflektierten zirkular polarisierten Anteil des Ortungssignals. Die Ortungsvorrichtung 14b gibt den zirkular polarisierten Anteil des Ortungssignals an die Recheneinheit 12b aus. Alternativ könnten ein Analog-Digital-Wandler und eine Recheneinheit zumindest teilweise einstückig ausgebildet sein. Des Weiteren weist die Ortungsvorrichtung 14b einen Balun 56b auf, der das Ortungssignal zur differenziellen Speisung der Ortungsantenne wandelt.

**Patentansprüche**

1. Handwerkzeugvorrichtung mit einer Recheneinheit (12a; 12b) und zumindest einer Ortungsvorrichtung (14a; 14b), wobei die Ortungsvorrichtung (14a) eine Ortungsantenne (20a) aufweist, die dazu vorgesehen ist, zumindest zwei orthogonale lineare Polarisationsrichtungen eines Ortungssignals getrennt voneinander zu senden und getrennt voneinander zu empfangen, **dadurch gekennzeichnet, dass** die Recheneinheit (12a) dazu vorgesehen ist, mit der Bestimmung eines zirkular polarisierten Anteils des Ortungssignals aus zumindest zwei empfangenen linearen Polarisationsrichtungen des Ortungssignals zumindest eine Positionsinformation eines Ortungsobjekts (16a) zu ermitteln.

2. Handwerkzeugvorrichtung nach Anspruch 1, **dadurch gekennzeichnet, dass** die Recheneinheit (12a) dazu vorgesehen ist, den zirkular polarisierten Anteil des Ortungssignals aus zumindest einem Copolarisationsparameter und zumindest einem Kreuzpolarisationsparameter des reflektierten Ortungssignals zu bestimmen.

3. Handwerkzeugvorrichtung nach einem der vorhergehenden Ansprüche, **dadurch gekennzeichnet, dass** die Ortungsvorrichtung (14a) zum Empfang jeder Polarisationsrichtung zumindest einen Speisepunkt (22a, 24a, 26a, 28a) aufweist.

4. Handwerkzeugvorrichtung nach einem der vorhergehenden Ansprüche, **dadurch gekennzeichnet, dass** die Ortungsvorrichtung (14a) dazu vorgesehen ist, einen einzelnen Speisepunkt (22a, 24a, 26a, 28a) anzuregen.

5. Handwerkzeugvorrichtung zumindest nach Anspruch 1, **dadurch gekennzeichnet, dass** die Ortungsantenne (20a) als eine LCR-Antenne ausgebildet ist.

6. Handwerkzeugvorrichtung nach einem der vorhergehenden Ansprüche, **dadurch gekennzeichnet, dass** die Ortungsvorrichtung (14b) dazu vorgesehen ist, einen zirkular polarisierten Anteil des Ortungssignals auszugeben.

7. Handwerkzeugvorrichtung nach Anspruch 6, **dadurch gekennzeichnet, dass** die Ortungsvorrichtung (14b) eine Ortungsantenne (20b) aufweist, die dazu vorgesehen ist, den zirkular polarisierten Anteil des Ortungssignals direkt zu empfangen.

8. Handortungsgerät mit einer Handwerkzeugvorrichtung (10a; 10b) nach einem der vorhergehenden Ansprüche.

9. Handwerkzeug mit einer Handwerkzeugvorrichtung (10) nach einem der Ansprüche 1 bis 7.

10. Verfahren mit einer Handwerkzeugvorrichtung (10a; 10b) insbesondere nach einem der Ansprüche 1 bis 8, die eine Ortungsvorrichtung (14a; 14b), vorgesehen, zumindest zwei orthogonale lineare Polarisationsrichtungen eines Ortungssignals getrennt voneinander zu senden und getrennt voneinander zu empfangen, sowie eine Recheneinheit (12a; 12b), vorgesehen, mit der Bestimmung eines zirkular polarisierten Anteils des Ortungssignals aus zumindest zwei empfangenen linearen Polarisationsrichtungen des Ortungssignals zumindest eine Positionsinformation eines Ortungsobjekts (16a) zu ermitteln, aufweist.

**Claims**

1. Handheld tool apparatus having a computation unit (12a; 12b) and at least one locating apparatus (14a; 14b), wherein the locating apparatus (14a) has a locating antenna (20a) that is provided for the purpose of sending at least two orthogonal linear polarization directions of a locating signal separately from one another and receiving them separately from one another, **characterized in that** the computation unit (12a) is provided for the purpose of ascertaining at least one piece of position information for a locatable object (16a) by means of determination of a circularly polarized component of the locating signal from at least two received linear polarization directions of the locating signal.

2. Handheld tool apparatus according to Claim 1, **characterized in that** the computation unit (12a) is provided for the purpose of determining the circularly polarized component of the locating signal from at least one copolarization parameter and at least one cross-polarization parameter for the reflected locating signal.

3. Handheld tool apparatus according to either of the preceding claims, **characterized in that** the locating apparatus (14a) has at least one feed point (22a, 24a, 26a, 28a) for receiving each polarization direction.

4. Handheld tool apparatus according to one of the preceding claims, **characterized in that** the locating apparatus (14a) is provided for the purpose of exciting a single feed point (22a, 24a, 26a, 28a).

**5.** Handheld tool apparatus according to Claim 1, **characterized in that** the locating antenna (20a) is in the form of an LCR antenna.

**6.** Handheld tool apparatus according to one of the preceding claims, **characterized in that** the locating apparatus (14b) is provided for the purpose of outputting a circularly polarized component of the locating signal.

**7.** Handheld tool apparatus according to Claim 6, **characterized in that** the locating apparatus (14b) has a locating antenna (20b) that is provided for the purpose of directly receiving the circularly polarized component of the locating signal.

**8.** Handheld locating appliance having a handheld tool apparatus (10a; 10b) according to one of the preceding claims.

**9.** Handheld tool having a handheld tool apparatus (10) according to one of Claims 1 to 7.

**10.** Method with a handheld tool apparatus (10a; 10b), particularly according to one of Claims 1 to 8, that has a locating apparatus (14a; 14b), intended to send at least two orthogonal linear polarization directions of a locating signal separately from one another and to receive them separately from one another, and a computation unit (12a; 12b), intended to ascertain at least one piece of position information for a locatable object (16a) by means of determination of a circularly polarized component of the locating signal from at least two received linear polarization directions of the locating signal.

**Revendications**

**1.** Système d'outil manuel comprenant une unité de calcul (12a ; 12b) et au moins un système de localisation (14a ; 14b), le système de localisation (14a) possédant une antenne de localisation (20a) qui est conçue pour émettre séparément l'une de l'autre et recevoir séparément l'une de l'autre au moins deux directions de polarisation linéaires orthogonales d'un signal de localisation, **caractérisé en ce que** l'unité de calcul (12a) est conçue pour, avec la détermination d'une part du signal de localisation polarisée circulairement, identifier au moins une information de position d'un objet de localisation (16a) à partir d'au moins deux directions de polarisation linéaires reçues du signal de localisation.

**2.** Système d'outil manuel selon la revendication 1, **caractérisé en ce que** l'unité de calcul (12a) est conçue pour déterminer la part du signal de localisation polarisée circulairement à partir d'au moins un paramètre de copolarisation et d'au moins un paramètre de polarisation croisée du signal de localisation réfléchi.

**3.** Système d'outil manuel selon l'une des revendications précédentes, **caractérisé en ce que** le système de localisation (14a) possède au moins un point d'alimentation (22a, 24a, 26a, 28a) pour la réception de chaque direction de polarisation.

**4.** Système d'outil manuel selon l'une des revendications précédentes, **caractérisé en ce que** le système de localisation (14a) est conçu pour exciter un point d'alimentation (22a, 24a, 26a, 28a) individuel.

**5.** Système d'outil manuel au moins selon la revendication 1, **caractérisé en ce que** l'antenne de localisation (20a) est réalisée sous la forme d'une antenne LCR.

**6.** Système d'outil manuel selon l'une des revendications précédentes, **caractérisé en ce que** le système de localisation (14b) est conçu pour délivrer une part polarisée circulairement du signal de localisation.

**7.** Système d'outil manuel selon la revendication 6, **caractérisé en ce que** le système de localisation (14b) possède une antenne de localisation (20b), qui est conçue pour recevoir directement la part polarisée circulairement du signal de localisation.

**8.** Appareil de localisation manuel comprenant un système d'outil manuel (10a ; 10b) selon l'une des revendications précédentes.

**9.** Outil manuel comprenant un système d'outil manuel (10) selon l'une des revendications 1 à 7.

**10.** Procédé avec un système d'outil manuel (10a ; 10b), notamment selon l'une des revendications 1 à 8, lequel possède un système de localisation (14a ; 14b), conçu pour émettre séparément l'une de l'autre et recevoir séparément l'une de l'autre au moins deux directions de polarisation linéaires orthogonales d'un signal de localisation, ainsi qu'une unité de calcul (12a ; 12b), conçue pour, avec la détermination d'une part du signal de localisation polarisée circulairement, identifier au moins une information de position d'un objet de localisation (16a) à partir d'au moins deux directions de polarisation linéaires reçues du signal de localisation.

**FIG. 1**

**FIG. 2**

FIG. 3

**FIG. 4**

**EP 2 791 710 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100207803 A1
- US 6657577 B1

- DE 102008041651 A1